(19) Europäisches Patentamt
European Patent Office
Office européen des brevets

(11) **EP 4 285 215 B1**

(12) **EUROPEAN PATENT SPECIFICATION**

(45) Date of publication and mention
of the grant of the patent:
**26.02.2025 Bulletin 2025/09**

(21) Application number: **22703204.2**

(22) Date of filing: **18.01.2022**

(51) International Patent Classification (IPC):
*G06F 7/483* (2006.01)     *G06F 7/556* (2006.01)

(52) Cooperative Patent Classification (CPC):
**G06F 7/556; G06F 7/483**

(86) International application number:
**PCT/US2022/012827**

(87) International publication number:
**WO 2022/164678 (04.08.2022 Gazette 2022/31)**

(54) **DIGITAL CIRCUITRY FOR NORMALIZATION FUNCTIONS**

DIGITALE SCHALTUNG FÜR NORMALISIERUNGSFUNKTIONEN

CIRCUIT NUMÉRIQUE POUR FONCTIONS DE NORMALISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.01.2021 US 202117163225**

(43) Date of publication of application:
**06.12.2023 Bulletin 2023/49**

(73) Proprietor: **Microsoft Technology Licensing, LLC
Redmond, WA 98052-6399 (US)**

(72) Inventors:
• **HOEFLER, Torsten
Redmond, WA 98052-6399 (US)**
• **HEDDES, Mattheus C
Redmond, WA 98052-6399 (US)**

(74) Representative: **CMS Cameron McKenna Nabarro
Olswang LLP
Cannon Place
78 Cannon Street
London EC4N 6AF (GB)**

(56) References cited:
**US-B1- 6 178 435**

• **GENG XUE ET AL: "Hardware-Aware Softmax
Approximation for Deep Neural Networks", 25
May 2019, COMPUTER VISION - ECCV 2020 :
16TH EUROPEAN CONFERENCE, GLASGOW,
UK, AUGUST 23-28, 2020 : PROCEEDINGS;
[LECTURE NOTES IN COMPUTER SCIENCE ;
ISSN 0302-9743], SPRINGER INTERNATIONAL
PUBLISHING, CHAM, PAGE(S) 107 - 122, ISBN:
978-3-030-58594-5, XP047612482**
• **KOURETAS I ET AL: "Simplified Hardware
Implementation of the Softmax Activation
Function", 2019 8TH INTERNATIONAL
CONFERENCE ON MODERN CIRCUITS AND
SYSTEMS TECHNOLOGIES (MOCAST), IEEE, 13
May 2019 (2019-05-13), pages 1 - 4, XP033563058,
DOI: 10.1109/MOCAST.2019.8741677**

**Description**

BACKGROUND

The present disclosure relates to computing, and more particularly, to digital circuits for normalization functions.

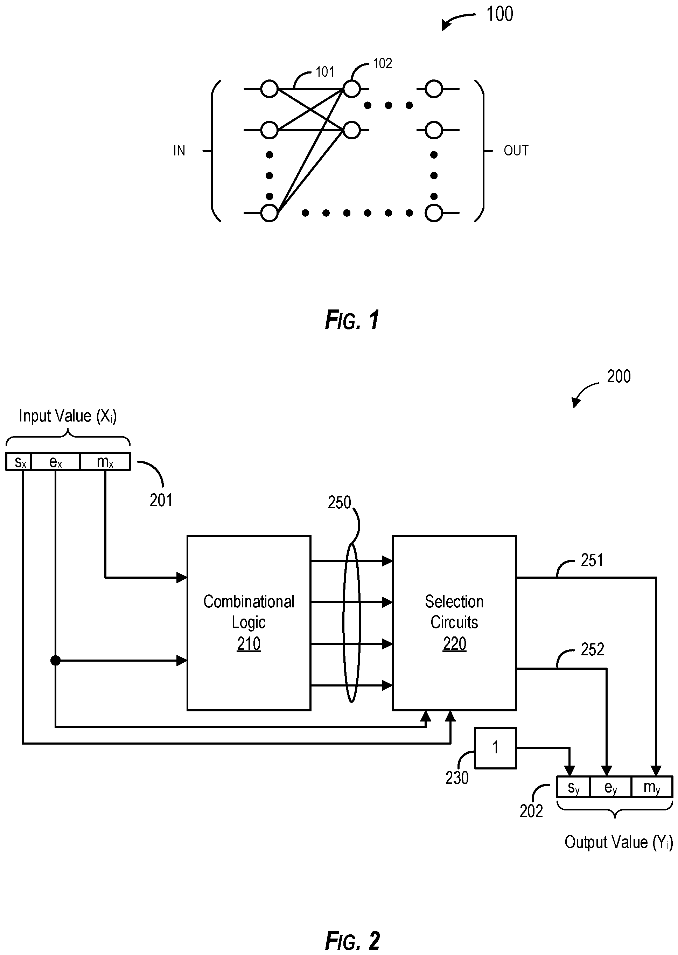

Artificial neural networks (hereinafter, neural network) have become increasingly important in artificial intelligence applications and modern computing in general. An example neural network is shown in Fig. 1. Neural network 100 receives input values corresponding to features to be recognized. The input values are multiplied by weights (represented by edges 101) and added together (e.g., summed) in nodes 102. An activation function is applied to the result in the nodes 102 to generate an output value. Values are combined across multiple nodes and layers of nodes to produce network output values corresponding to a result.

Such systems "learn" to perform tasks by considering examples, generally without being programmed with task-specific rules. Initially, the weights may be untrained. During a training phase, input values for corresponding known results are processed by the network, and the difference (or error) between the network output values is compared to known values. The weights may be adjusted based on the error using a process known as backpropagation, where computations flow in the reverse direction (e.g., from the output to the input). Training may involve successively adjusting weights across many input samples and corresponding known network output values. This is often referred to as the training phase. Once trained, the system may receive inputs and produce meaningful results (e.g., classification or recognition). This is often referred to as the inference phase.

As the popularity of neural networks has increased, so to has the complexity of problems neural networks are being used to solve. As the complexity of the problems increases, the size and computational complexity of the networks has increased. One common and very time-consuming operation in a neural network is normalization. For example, as activations and weights are multiplied and summed across nodes of a network, it is common to normalize the results. Softmax is an example of one such normalization function. Softmax may be used as the last activation function of a neural network to normalize the output of a network to a probability distribution over predicted output classes, for example. However, normalization functions often require complex numerical calculations that can slow down the network. The disclosure presented herein provides digital circuits and processing techniques that may be used in normalization functions (and other applications) more efficiently.

Various embodiments, examples, and advantages are described in the detailed description below.

US 6 178 435 B1 describes a method for performing a power of two estimation on a floating-point number within a data processing system. The floating-point number includes a sign bit, multiple exponent bits, and a mantissa having an implied one and multiple fraction bits. In order to estimate the power of two of the floating-point number, the mantissa is partitioned into an integer part and a fraction part, based on the value of the exponent bits. A floating-point result is formed by assigning the integer part of the floating-point number as an unbiased exponent of the floating-point result, and by converting the fraction part of the floating-point number via a table lookup to become a fraction part of the floating-point result.

GENG XUE ET AL: "Hardware-Aware Softmax Approximation for Deep Neural Networks", 25 May 2019 (2019-05-25), COMPUTER VISION - ECCV 2020: 16TH EUROPEAN CONFERENCE, GLASGOW, UK, AUGUST 23-28, 2020: PROCEEDINGS; [LECTURE NOTES IN COMPUTER SCIENCE; ISSN 0302-9743], SPRINGER INTERNATIONAL PUBLISHING, CHAM, PAGE(S) 107 - 122, XP047612482 addresses the problem of cost-efficient inference for Soft-max, a popular non-linear function in DNNs. There is provided a hardware-aware linear approximation framework by algorithm and hardware co-optimization, with the goal of minimizing the cost in terms of area and energy, without incurring significant loss in application accuracy. This is achieved by simultaneously reducing the operand bit-width and approximating cost-intensive operations in Softmax (e.g. exponential and division) with cost-effective operations (e.g. addition and bit shifts). A hardware unit for an approximation approach, to estimate the area and energy Consumption, is designed. In addition, there is provided a training method to further save area and energy cost. It reduces area cost by 13x and energy consumption by 2x with 11-bit operand width, compared to baseline at 19-bit for VOC2007 dataset in Faster R-CNN. KOURETAS I ET AL: "Simplified Hardware Implementation of the Softmax Activation Function", 2019 STH INTERNATIONAL CONFERENCE ON MODERN CIRCUITS AND SYSTEMS TECHNOLOGIES (MOCAST), IEEE, 13 May 2019 (2019-05-13), pages 1-4, XP033563058 describes a simplified hardware implementation of a CNN softmax layer is proposed. Initially the softmax activation function is analyzed in terms of required accuracy and certain optimizations are proposed. Subsequently the proposed hardware architecture is evaluated in terms of the introduced approximation error. Finally the proposed circuits are synthesized in a 90-nm 1.0 V CMOS standard-cell library using Synopsys Design Compiler. Comparisons reveal significant reduction up to 47% and 43% for certain cases, in terms of area x delay product over prior art. Area savings are achieved with no performance penalty.

SUMMARY

The invention is set out in the appended set of claims.

BRIEF DESCRIPTION OF THE DRAWINGS

Various embodiments of the present disclosure are illustrated by way of example and not limitation in the figures of the accompanying drawings.

Fig. 1 illustrates an example neural network.
Fig. 2 illustrates a digital circuit according to an embodiment.
Fig. 3 illustrates a digital circuit according to another embodiment.
Fig. 4 illustrates an example digital circuit for generating approximations of $2^x$ according to another embodiment.
Fig. 5A illustrates an example digital circuit for generating approximations of $4^x$ according to another embodiment.
Fig. 5B illustrates another example digital circuit for generating approximations of $4^x$ according to another embodiment.
Fig. 6 illustrates a normalization system according to an embodiment.
Fig. 7 illustrates a method according to an embodiment.
Fig. 8 illustrates a neural network processing system according to some embodiments.

DETAILED DESCRIPTION

In the following description, for purposes of explanation, numerous examples and specific details are set forth in order to provide a thorough understanding of the present disclosure. Such examples and details are not to be construed as unduly limiting the elements of the claims or the claimed subject matter as a whole. It will be evident to one skilled in the art, based on the language of the different claims, that the claimed subject matter may include some or all of the features in these examples, alone or in combination, and may further include modifications and equivalents of the features and techniques described herein.

Features and advantages of the present disclosure include a digital circuit that receives input values (e.g., floating point) and produces output values corresponding to an approximate value of a power of two (2) (e.g., 2, 4, ...) raised to a power of the input value x (e.g., $2^x$, $4^x$, etc...). As described in more detail below, the Softmax function may be approximated using such functions. Advantageously, such functions may be implemented in combinational digital logic, which may be able to generate outputs without waiting for multiple clock cycles, for example. Accordingly, some example embodiments may be able to generate outputs based only on a present input, in contrast to sequential logic, in which the output depends not only on the present input but also on the prior inputs (e.g., data is stored). This may result in faster, lower latency systems which may implement many approximations of the Softmax function, for example.

Fig. 2 illustrates a digital circuit 200 according to an embodiment. Circuit 200 receives an input value 201 in a floating point representation. Input value (Xi) 201 comprises an input exponent ($e_x$), input mantissa ($m_x$), and an input sign bit ($s_x$) represented as digital bits. Digital circuit 200 comprises combinational logic 210 which receives the digital bits representing an input mantissa $m_x$ and digital bits representing an input exponent $e_x$ and generates a plurality of output mantissas and plurality of output exponents 250 corresponding to an approximate value of a power of two (2) raised to a power of the input value. In one example embodiment, combinational logic 210 generates a plurality of shifted versions of the input mantissa, where the input mantissa is shifted based on the input exponent to produce the output mantissas and output exponents. Advantageously, separate output mantissas and output exponents may be generated across four quadrants, for example, when the input value is positive and negative and when the input exponent is above and below a first value.

Digital circuit 200 further includes selection circuits 220. Selection circuits 220 are configured to receive the output mantissas and output exponents 250 and produce one final output mantissa 251 and one final output exponent 252. Accordingly, embodiments of the present disclosure may include two or more selection circuits, such as multiplexers, in selection circuits 220, for example. Selection circuits 220 may include selection control inputs coupled to the input exponent and an input sign bit of the input value (Xi). As illustrated here and in further embodiments below, features of the present disclosure include selecting one of the output mantissas as the final output mantissa 251 and selecting one of the output exponents as the final output exponent 252 based on the input exponent and the input sign bit. Since digital circuit 200 implements an approximate value of a power of two (2) raised to a power of the input value (e.g., $N^x$, N = 2, 4, 8, 16,...), the output sign bit is constant value 1, and may be hardwired at 230, for example. Thus, the output value (Yi) 202 generated by digital circuit 200 may also be a floating point value comprising an exponent ($e_y$), mantissa ($m_y$), and a sign bit ($s_y$). Advantageously, in some embodiments, streams of input values (Xi) may be converted to output values (Yi) very quickly (e.g., on each clock cycle) for efficient computation of an approximation of the Softmax function, for example.

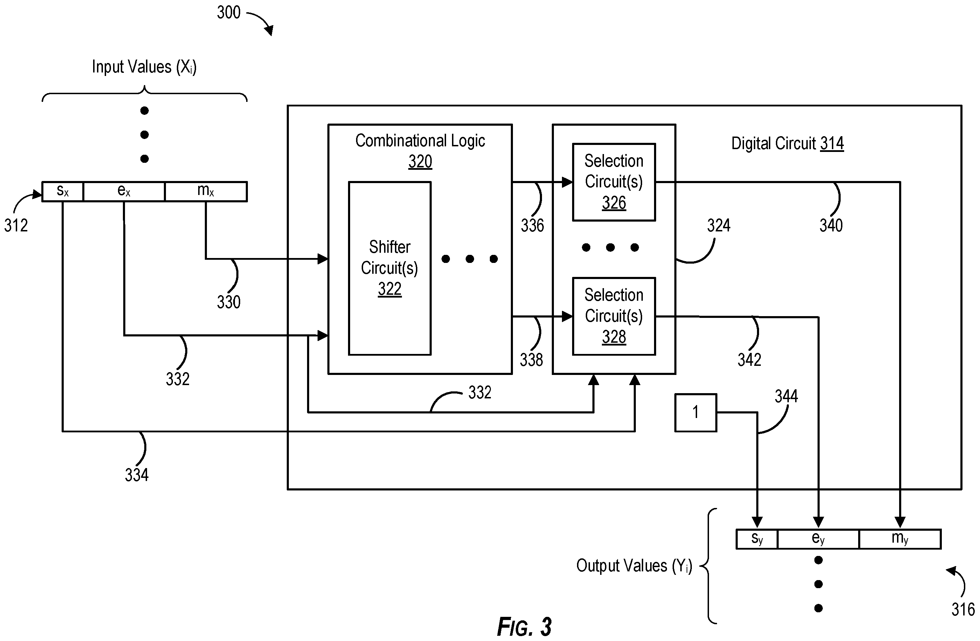

Fig. 3 illustrates a digital circuit according to another embodiment. Features and advantages of the present disclosure include shifting the mantissa of the input value based on the exponent to produce output mantissas and output exponents, which may then be selected based on the input exponent and input sign bit. In this example, digital circuit 314 receives input values 312 comprising an input sign bit, input exponent, and input mantissa and produce an output value 316 approximately equal to a power of two (2) raise to the power of the input (e.g., $2^x$, $4^x$) comprising an output sign bit, output exponent, and output mantissa. Digital circuit 314 includes combinational logic 320, which in this example includes shifter circuits 322. A plurality of shifter circuits may receive in the input mantissa and input exponent, for example. Features and advantages of the present disclosure include shifting the input mantissa 330 based on the input exponent 332 to produce a plurality of output manitssas 336 and output exponents 338, which are coupled to selection circuits 326 and 328 for selection one output mantissa/exponent pair as the final outputs based on the input sign bit 334 and input exponent 332. The shifter circuits may produce left and right shifted versions of the input mantissa. For example, a right shifter circuit may include a first input coupled to the input mantissa 330 through a logic circuit configured to add the input mantissa to a constant and a shift input coupled to the input exponent 332 through a logic circuit configured to negate the input exponent. Additionally, a first left shifter circuit may include a first input coupled to receive the input mantissa 330 and a shift input coupled to the input exponent 332, for example. A right shifted version of the input mantissa may be used to form a first output mantissa and a second output mantissa, and lower bits of a left shifted version of the input mantissa may be used to form a third output mantissa and a fourth output mantissa. Further, upper bits of a left shifted version of the input mantissa may be used to form a first output exponent and a second output exponent. Further examples and illustrations of these techniques are provided below.

In some example embodiments, the shifter circuits are barrel shifter circuits, which is a digital circuit that can shift a data word by a specified number of bits using combinational logic (e.g., without the use of any sequential logic and associated delays from storing data over time). Barrel shifters may be advantageous in applications where it is desirable to obtain a result on a single clock cycle, for example.

Each output mantissa 336 may have an associated output exponent 338, for example, corresponding to a particular pair of values for the input exponent 332 and input sign bit 334 (e.g., 4 sets of tuples for $s_x$ greater than or less than 1, and $e_x$ greater than or less than 0 or -1). Selection circuits 326 and 328 are controlled by the input exponent 332 and input sign bit 334. Accordingly, a final output mantissa 340 and final output exponent 342 may be selected from the plurality of output mantissas 336 and output exponents 338 based on the input exponent 332 and input sign bit 334.

Accordingly, selection circuits 326 may produce different output mantissas, and selection circuits 328 may produce different output exponents, based on the input sign bit and input exponent. First, selection circuits 326 and 328 may produce a final output mantissa comprising a shifted version of a sum of the input mantissa and a constant and an output exponent having a zero value (0) when the input sign bit is positive and the input exponent is less than a first value (e.g., 0 or -1). Second, selection circuits 326 and 328 may produce a final output mantissa comprising a modulus of another shifted version of the input mantissa and a final output exponent having a digital value of one (1) shifted based on the input exponent added to an integer division of the shifted version of the input mantissa when the input sign bit is positive and the input exponent is greater than the first value. Third, selection circuits 326 and 328 may produce a final output mantissa comprising the first shifted version of the sum of the input mantissa and a constant, subtracted from a second constant, and a final output exponent having negative one (-1) value when the input sign bit is negative and the input exponent is less than the first value. Finally, selection circuits 326 and 328 may produce a final output mantissa comprising a modulus of the second shifted version of the input mantissa, subtracted from the second constant, and a negation of the second output exponent minus one (1) when the input sign bit is negative and the input exponent is greater than the first value. Various example implementations and further illustrations of the above techniques are provided below.

EXAMPLE IMPLEMENTATIONS

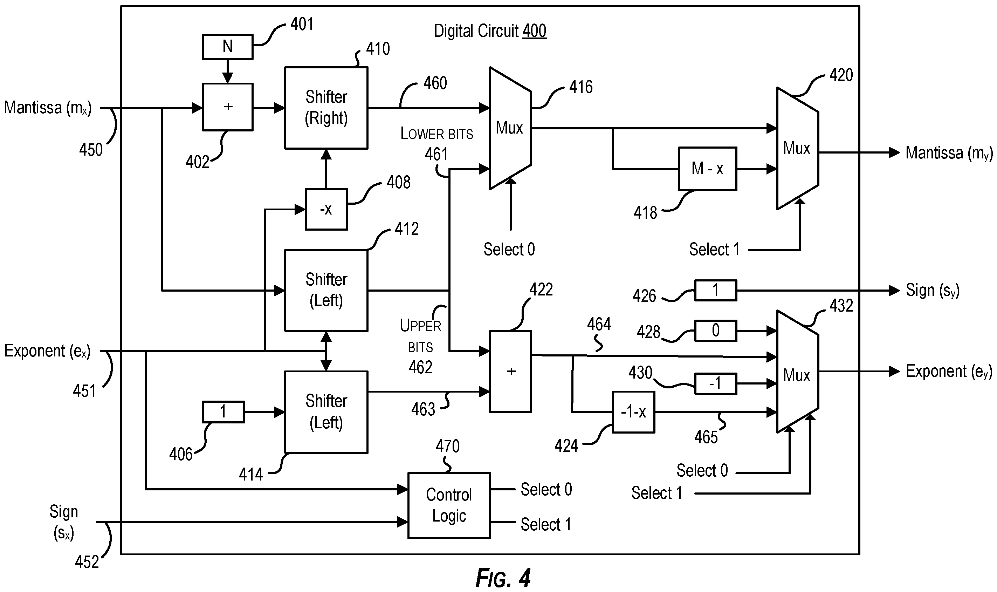

Fig. 4 illustrates an example digital circuit 400 for generating approximations of $2^x$ according to another embodiment. Digital circuit 400 includes right shifter circuit 410, left shifter circuit 412, and left shifter circuit 414. Input mantissa 450 is coupled to an adder circuit 402. Adder circuit 402 further receives a constant value (N) 401 and outputs a sum of the input mantissa and a constant (N). For example, for an input mantissa that can take on values between 0 and 128 ($m_x$, $0 \leq m_x < 128$), constant N may be equal to 128. In various embodiments, adder 402 may be replaced with OR logic to implement (e.g., 128 OR $m_x$), for example, as illustrated in further examples below. The output of adder 402 is coupled to an input of right shifter 410. A shift input of right shifter 410, which controls the shift operation, is coupled to input exponent 451 thought a negation circuit (-x) 408, which receives the input exponent ($e_x$) and produces a negative of the input exponent ($-e_x$). For example, right shifter circuit 410 may produce a right shifted version of the input mantissa 450 having values between 0 and 128 as follows:

$$(128 + m_x) \gg -(e_x)$$

The above right shifter version of the input mantissa is a first output mantissa 460 for a value of $2^x$ for cases where the input sign bit is +1 and the input exponent is less than zero (0).

Input mantissa 450 is also coupled to an input of left shifter 412. A shift input of left shifter 412 is coupled to input exponent 451. Accordingly, left shifter 412 produces a left shifted version of the input mantissa. Lower bits of the left shifted version of the input mantissa form a modulus function. In this example, lower bits of the left shifted version of the input mantissa correspond to a second output mantissa 461 for a value of $2^x$ when the input sign bit is +1 and the input exponent is greater than or equal to zero (0) as follows:

$$(m_x \ll (e_x)) mod\ 128.$$

In this example, first and second output mantissas 460-461 are coupled to multiplexer (Mux) 416. An output of Mux 416 is coupled to an input of Mux 420, and an output of Mux 420 produces the final output mantissa. Muxes 416 and 420 have selection control signals, Select 0 and Select 1, based on the values of the input sign bit 452 and input exponent 451 to select one of output manitssas 460-461.

The right and left shifted versions of the input mantissas may be subtracted from a constant (M) to form additional output mantissas. In this example, the output of Mux 416 is coupled to constant subtraction logic circuit 418 (M-x), which subtracts the output of Mux 416 from a constant value (e.g., 127 for a mantissa having values between 0-128). Accordingly, the output of subtraction circuit may be either:

$$127 - (128 + m_x) \gg -(e_x)\ ,$$

or

$$127 - (m_x \ll (e_x)) mod\ \mathbf{128}.$$

These alternative outputs form third and fourth output mantissas for a value of $2^x$ when the input sign bit is -1 and the input exponent is positive or negative. Either output mantissa may be selected as the final output mantissas by Mux 420.

A plurality of output exponents may also be generated from shifter circuits. In various embodiments, output exponents may be produced from adding upper bits of the left shifted input mantissa to a value of two (2) raised to a power of the input exponent ($2^{e_x}$). In this example, digital circuit 400 further includes left shifter circuit 414 having input coupled to a value of one (1) (e.g., a binary value of 1 or a bit value of 1) and a shift input coupled to the input exponent 451, where left shifting 1 by the input exponent results in $2^{e_x}$. The upper bits from left shifter 412 form an integer divide function (DIV). Thus, the outputs of shifter 412 and shifter 414 may be added in adder 422 to produce an output exponent 464 as follows:

$$2^{e_x} + \left( (m_x \ll (e_x)) mod\ 128 \right).$$

The output of adder 422 is further coupled through a negation circuit (-1-x) 424 to produce another output exponent 465 as follows:

$$-2^{e_x} - \left( (m_x \ll (e_x)) mod\ 128 \right) - 1.$$

Finally, output exponent 464 is couple to a first input of Mux 432, output exponent 465 is coupled to a second input of Mux 432. Values of zero (0) 428 and negative one (-1) 430 are coupled to other inputs of Mux 432. The final output mantissas and exponents for $2^x$ may selected as follows:

Table 1

| | $s_y$ | Exponent ($e_y$) | Mantissa ($m_y$) |
|---|---|---|---|
| $s_x = +1\ and\ e_x < 0$ | +1 | 0 | $(128 + m_x) \gg -(e_x)$ |
| $s_x = +1\ and\ e_x \geq 0$ | +1 | $2^{e_x} + ((m_x \ll (e_x) div\ 128)$ | $(m_x \ll (e_x)) mod\ 128$ |
| $s_x = -1\ and\ e_x < 0$ | +1 | -1 | $127 - \mathbf{((128 + m_x) \gg -(e_x))}$ |
| $s_x = -1\ and\ e_x \geq 0$ | +1 | $-2^{e_x} - ((m_x \ll ((e_x) div\ 128) - 1$ | $127 - ((m_x \ll (e_x)) mod\ 128)$ |

Accordingly, digital circuit 400 further includes control logic 470 configured to receive the input exponent and the input sign bit and generate control signals (Select 0, Select 1) to a mantissa selection circuit (e.g., Muxes 416 and 420) and exponent selection circuit (e.g., Mux 432). Selection control signals Select 0 and Select 1 configure the multiplexers such that the output of Mux 420 is coupled to an output of the right shifter circuit 410 and an output of the Mux 432 is coupled to a zero (0) value 428 when the input sign bit is positive and the input exponent is less than 0. Additionally, selection control signals Select 0 and Select 1 configure the multiplexers such that the output of Mux 420 is coupled to lower bits of the left shifter circuit 412 and an output of the exponent selection circuit is coupled a sum of upper bits of the left shifter circuit 412 and a value of two (2) raised to a power corresponding to the input exponent when the input sign bit is positive and the input exponent is greater than or equal to 0. Next, selection control signals Select 0 and Select 1 configure the multiplexers such that the output of Mux 420 is coupled to an output of the right shifter circuit 410 through a constant subtraction logic circuit 418 and an output of the multiplexer 432 is coupled to a constant negative one (-1) value when the input sign bit is positive and the input exponent is less than 0. Finally, selection control signals Select 0 and Select 1 configure the multiplexers such that the output of Mux 420 is coupled to lower bits of the left shifter circuit through the constant subtraction logic circuit 418 and an output of the multiplexer 432 is coupled a negative of a sum of upper bits of left shifter circuit 412 and a value of two (2) raised to a power corresponding to the input exponent when the input sign bit is negative and the input exponent is greater than the first value.

Muxes 416, 420 and 432 are examples of selection circuits, and the other circuits in Fig. 4 are one example combinational logic mechanisms for receiving first digital bits representing an input mantissa of an input value and second digital bits representing an input exponent of the input value and generating a plurality of output mantissas and plurality of output exponents.

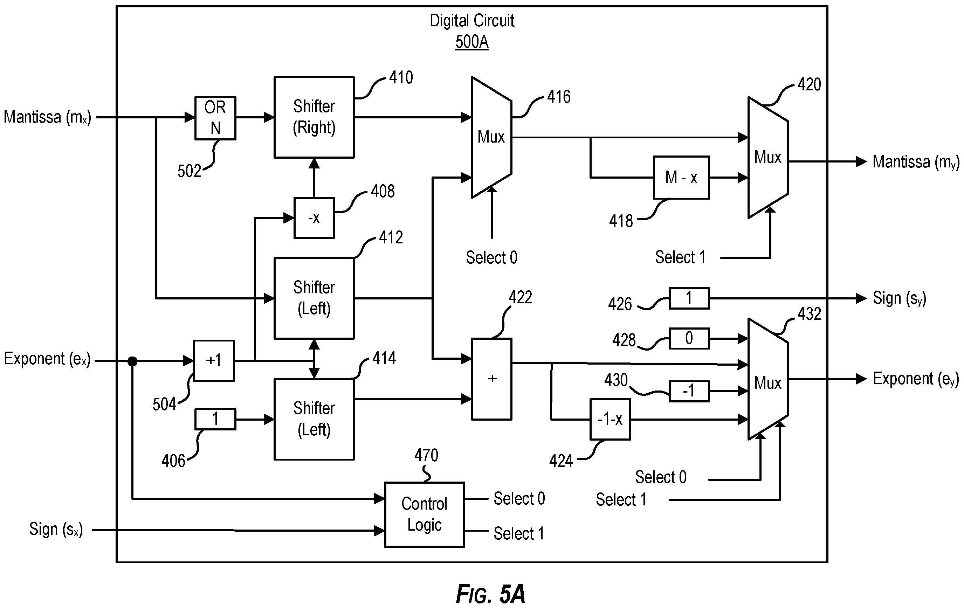

Fig. 5A illustrates an example digital circuit 500A for generating approximations of $4^x$ according to another embodiment. As illustrated in this example, the above-described techniques may be used to also implement a digital circuit for generating approximations of $4^x$. For approximations of $4^x$, the mantissa is shifted based on the input exponent added to a constant (e.g., $e_x+1$). Thus, digital circuit 500A further includes a +1 adder circuit, which adds the value of 1 to the input exponent. In this example, the adder between the input mantissa and shifter 410 is replace with OR logic as mentioned above. The following table illustrates the behavior of digital circuit 500A:

Table 2

| | $s_y$ | Exponent ($e_y$) | Mantissa ($m_y$) |
|---|---|---|---|
| $s_x=+1$ and $e_x<-1$ | +1 | 0 | $(128 + m_x) » -(e_x + 1)$ |
| $s_x=+1$ and $e_x\geq-1$ | +1 | $2^{e_x+1} + ((m_x « (e_x + 1))div\ 128)$ | $(m_x « (e_x + 1))\mathrm{mod}\ 128$ |
| $s_x=-1$ and $e_x<-1$ | +1 | -1 | $127 - ((128 + m_x) >> -(e_x + 1))$ |
| $s_x=-1$ and $e_x\geq-1$ | +1 | $-2^{e_{x+1}} - ((m_x « (e_x + 1))\ div\ 128) - 1$ | $127 - ((m_x << (e_x + 1))\ mod\ 128)$ |

Muxes 416, 420 and 432 are examples of selection circuits, and the other circuits in Fig. 5A are additional example combinational logic mechanisms for receiving first digital bits representing an input mantissa of an input value and second digital bits representing an input exponent of the input value and generating a plurality of output mantissas and plurality of output exponents.

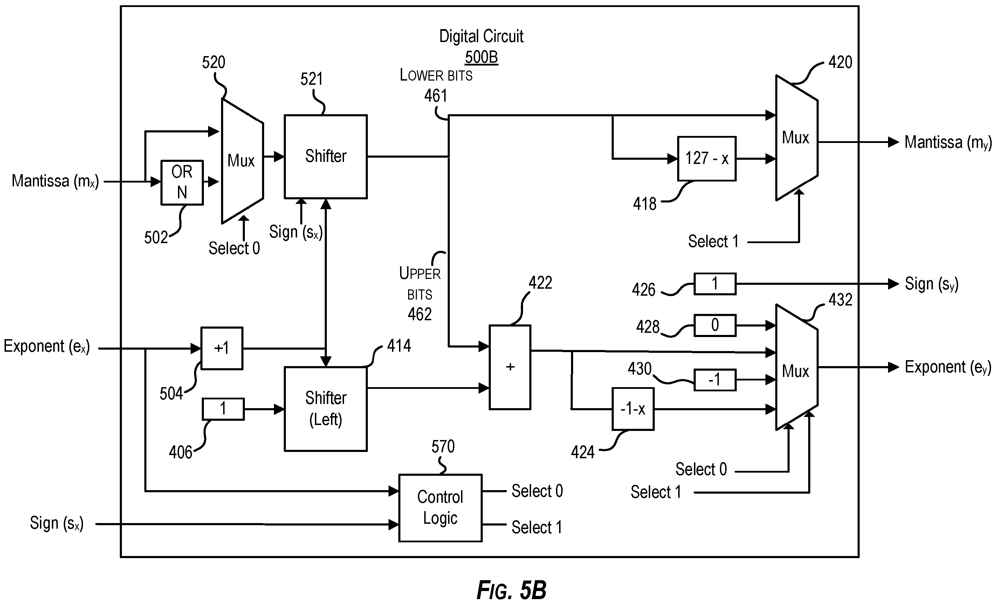

Fig. 5B illustrates another example digital circuit 500B for generating approximations of $4^x$ according to another embodiment. In this example, Mux 418 is removed and Mux 520 has one input coupled to the input mantissa and another input coupled to the input mantissa through OR logic 502. In this example, shifter 521 is a bidirectional shifter, where the direction of the shift (left/right) is set by the shift polarity input (here, the input sign bit). For the shift polarity input s, shifting is (s==0: no shifting; S>0: shift s positions left; S<0: shift s positions right). The behavior of digital circuit 500B is the same shown in Table 2 above. Removing adder circuit (+1) 504 results in the same behavior as illustrated in Table 1 above.

Muxes 520, 420 and 432 are further examples of selection circuits, and the other circuits in Fig. 5B are additional example combinational logic mechanisms for receiving first digital bits representing an input mantissa of an input value and second digital bits representing an input exponent of the input value and generating a plurality of output mantissas and plurality of output exponents.

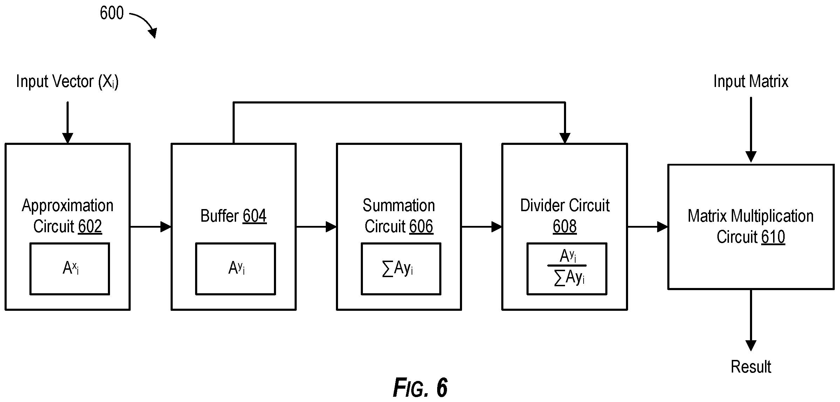

Fig. 6 illustrates a normalization system 600 according to an embodiment. In this example, an input vector is received by approximation circuit 602 for determining $A^x$, where A is a power of two (2). Circuit 602 may be implemented using one of the techniques above. Circuit 602 generates values of $A^x$, which may be used to determine a normalization function such as an approximation of the Softmax function. For example, values of Ax may be stored in buffer 604. The values may be added together in summation circuit 606. Divider circuit 608 may access values in buffer 604 and the summed value $\sum A^x$ to produce normalized values: $A^x/\sum A^x$. The normalized values may, for example, be coupled to a matrix multiplication circuit 610. In some embodiments, the normalized values are used to process neural network data, for example.

The following illustrate how the above circuit behavior may approximate a Softmax function. The softmax function is defined as:

$$Softmax(x_i) = \frac{e^{x_i}}{\sum e^{x_i}}.$$

A function that is "similar" to $e^{x_i}$ in Softmax, may have the following properties: easy to compute in floating point, strictly monotonous, and quickly growing. In this example, bfloat16 is used as an example, but is extendible to fp32 and bfloat. A bfloat16 number is defined as:

$$x = s_x 2^{e_x}(1 + \frac{m_x}{128})$$

Where $s_x$ the sign of x (e.g., $s_x$ = +1 or $s_x$ = -1), $e_x$ the exponent of x (e.g., $-7 \leq e_x <= 7$), and $m_x$ the mantissa of x (e.g., $0 \leq m_x < 128$). When calculating $2^{ex}$ in bfloat16, the result is 0 for $e_x < -7$ and infinity for $e_x > 7$ - so check can be performed at the boundaries - but no need to implement for large exponents. Also, for IEEE FP numbers, there is an exponent offset.

Softmax can be approximated using powers of 2. For example, Softmax$_2$ may be defined as follows:

$$Softmax_2(x_i) = \frac{2^{x_i}}{\sum 2^{x_i}}.$$

It may be noted that Softmax(x) = Softmax2(log2(e)*x) = Softmax2(1.44*x). In other words, to get a better approximation, one can multiply x by 1.44 before invoking the circuitry that approximates $2^x$.

Next, an approximation of $2^{x_i}$ may be as follows:

$$2^x = 2^{s_x 2^{e_x}(1 + \frac{m_x}{128})} = \left(2^{(1 + \frac{m_x}{128})}\right)^{s_x 2^{e_x}}$$

Approximating $2^{(1 + \frac{m_x}{128})}$ with $2(1 + \frac{m_x}{128})$. Then:

$$Approx1: 2^x \approx \left(2\left(1 + \frac{m_x}{128}\right)\right)^{s_x 2^{e_x}} = 2^{s_x 2^{e_x}}\left(1 + \frac{m_x}{128}\right)^{s_x 2^{e_x}}$$

There are four cases for different values of the sign bit and input exponent:

Case A: $s_x$ = +1 and $e_x < 0$ (e.g., small positive numbers):

$$2^x \approx 2^{2^{e_x}}\left(1 + \frac{m_x}{128}\right)^{2^{e_x}}$$

$$2^{2^{e_x}}\left(1 + \frac{m_x}{128}\right)^{2^{e_x}} = (1 + 1)^{2^{e_x}}\left(1 + \frac{m_x}{128}\right)^{2^{e_x}}$$

$$\approx \left(1 + \frac{(128 \gg |e_x|)}{128}\right)\left(1 + \frac{(m_x \gg |e_x|)}{128}\right)$$

$$\approx \left(1 + \left(\frac{(128 \gg |e_x|) + (m_x \gg |e_x|)}{128}\right)\right)$$

Case B: $s_x$ = +1 and $e_x \geq 0$ (e.g., large positive numbers):

$$2^x \approx 2^{2^{ex}} \left(1 + \frac{m_x}{128}\right)^{2^{ex}} \approx 2^{2^{ex}} \left(1 + \frac{m_x}{128} 2^{ex}\right) \approx 2^{2^{ex}} \left(1 + \frac{m_x}{128} 2^{ex}\right)$$

$$2^x \approx 2^{2^{ex}} \left(1 + \frac{m_x}{128} 2^{ex}\right) \approx 2^{2^{ex}+((m_x \ll |e_x|)div\ 128)} \left(1 + \frac{(m_x \ll |e_x|)mod\ 128}{128}\right)$$

Note that the implementation is very simple, since this is shifting and "bit-picking" with $-7 \leq e_x <= 7$. (e.g., $m_x$ is left-shifted: the lower 7 bits are used in the mantissa and the upper bits are used in the exponent as mentioned above).

Case C: $s_x = -1$ *and* $e_x < 0$ (e.g., small negative numbers):

$$2^x \approx 2^{-2^{ex}} \left(1 + \frac{m_x}{128}\right)^{-2^{ex}}$$

$$2^x \approx 2^{-2^{ex}} \left(1 + \frac{m_x}{128}\right)^{-2^{ex}} = (1+1)^{-2^{ex}} \left(1 + \frac{m_x}{128}\right)^{-2^{ex}} \approx \left(1 - \frac{(128 \gg |e_x|)}{128}\right)\left(1 - \frac{(m_x \gg |e_x|)}{128}\right)$$

$$\approx \left(1 - \left(\frac{(128 \gg |e_x|) + (m_x \gg |e_x|)}{128}\right)\right)$$

$$\approx 2^{-1} \left(1 + \left(\frac{127 - (128 \gg |e_x|) - (m_x \gg |e_x|)}{128}\right)\right)$$

Case D: $s_x = -1$ *and* $e_x \geq 0$ (e.g., large negative numbers):

$$2^x \approx 2^{-2^{ex}} \left(1 + \frac{m_x}{128}\right)^{-2^{ex}} \approx 2^{-2^{ex}} \left(1 - \frac{m_x}{128} 2^{ex}\right) \approx 2^{-2^{ex}-((m_x \ll |e_x|)div\ 128)} \left(1 - \frac{(m_x \ll |e_x|)mod\ 128}{128}\right)$$

$$\approx 2^{-2^{ex}-((m_x \ll |e_x|)div\ 128)-1} \left(1 + \frac{127 - (m_x \ll |e_x|)mod\ 128}{128}\right)$$

The following illustrates Softmax approximated using powers of 4. For example, Softmax$_4$ may be defined as follows:

$$Softmax_4(x_i) = \frac{4^{x_i}}{\sum 4^{x_i}}$$

Now approximate $4^{x_i}$.

$$4^x = 4^{s_x\, 2^{ex}\left(1+\frac{m_x}{128}\right)} = \left(4^{\left(1+\frac{m_x}{128}\right)}\right)^{s_x\, 2^{ex}},$$

Approximate $4^{\left(1+\frac{m_x}{128}\right)}$ with $4\left(1 + \frac{m_x}{128}\right)^2$.

$$4^x \approx \left(4(1 + \frac{m_x}{128})^2\right)^{s_x\, 2^{ex}} = 4^{s_x\, 2^{ex}} \left(1 + \frac{m_x}{128}\right)^{2 s_x\, 2^{ex}} = 2^{s_x\, 2^{ex+1}} \left(1 + \frac{m_x}{128}\right)^{s_x\, 2^{ex+1}}$$

Case A: $s_x = +1$ *and* $e_x < -1$ (e.g., small positive numbers):

$$4^x \approx 2^{2^{e_x+1}} \left(1 + \frac{m_x}{128}\right)^{2^{e_x+1}} = (1+1)^{2^{e_x+1}} \left(1 + \frac{m_x}{128}\right)^{2^{e_x+1}}$$

$$\approx (1 + 2^{e_x+1}) \left(1 + \frac{m_x 2^{e_x+1})}{128}\right) \approx \left(1 + 2^{e_x+1} + \frac{m_x 2^{e_x+1})}{128}\right)$$

$$= \left(1 + \frac{128 * 2^{e_x+1} + m_x 2^{e_x+1})}{128}\right)$$

$$\approx \left(1 + \left(\frac{(128 + m_x) \gg -(e_x+1)}{128}\right)\right)$$

Case B: $s_x$ = +1 *and* $e_x \geq$ -1 (e.g., large positive numbers):

$$4^x \approx 2^{2^{e_x+1}} \left(1 + \frac{m_x}{128}\right)^{2^{e_x+1}} \approx 2^{2^{e_x+1}} \left(1 + \frac{m_x}{128} 2^{e_x+1}\right)$$

$$\approx 2^{2^{e_x+1}+((m_x \ll (e_x+1))div\ 128)} \left(1 + \frac{(m_x \ll (e_x+1)) mod\ 128}{128}\right)$$

Again, the implementations comprise shifting and "bit-picking" with $-7 \leq e_x <= 7$ . (e.g., $m_x$ is left-shifted: the lower 7 bits may be used in the mantissa and the upper bits are used in the exponent).

Case C: $s_x$ = -1 *and* $e_x$ < -1 (e.g., small negative numbers):

$$4^x \approx 2^{-2^{e_x+1}} \left(1 + \frac{m_x}{128}\right)^{-2^{e_x+1}} = (1+1)^{-2^{e_x+1}} \left(1 + \frac{m_x}{128}\right)^{-2^{e_x+1}}$$

$$\approx (1 - 2^{e_x+1}) \left(1 - \frac{m_x 2^{e_x+1})}{128}\right) \approx \left(1 - 2^{e_x+1} - \frac{m_x 2^{e_x+1})}{128}\right)$$

$$\approx \left(1 - \frac{128 * 2^{e_x+1} + m_x 2^{e_x+1})}{128}\right)$$

$$\approx 2^{-1} \left(1 + \left(\frac{127 - ((128 + m_x) \gg -(e_x+1))}{128}\right)\right)$$

Case D: $s_x$ = -1 *and* $e_x \geq$ -1 (e.g., large negative numbers):

$$4^x \approx 2^{-2^{e_x+1}} \left(1 + \frac{m_x}{128}\right)^{-2^{e_x+1}} \approx 2^{-2^{e_x+1}} \left(1 - \frac{m_x}{128} 2^{e_x+1}\right)$$

$$\approx 2^{-2^{e_x+1}-((m_x \ll (e_x+1)\ div\ 128)-1} \left(1 + \frac{127 - ((m_x \ll (e_x+1)\ mod\ 128)}{128}\right)$$

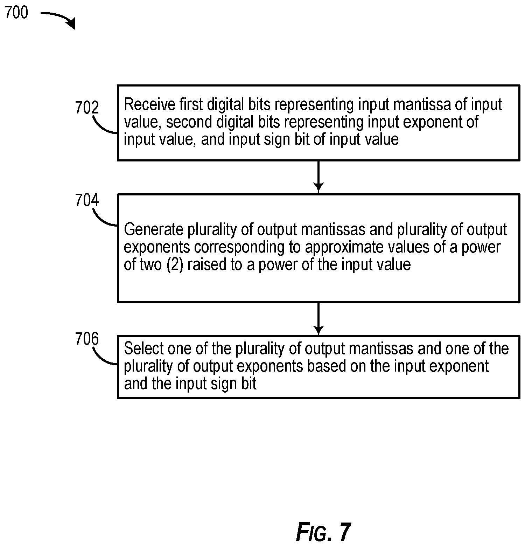

Fig. 7 illustrates a method 700 according to an embodiment. At 702, first digital bits and second digital bits are received in a digital circuit. The first digital bits represent a mantissa of an input value, and the second digital bits represent an exponent of the input value. The input value may be in a floating point format, for example, and further include a sign bit. At 702, a plurality of output mantissas and plurality of output exponents are generated. The output mantissas and output exponents correspond to approximate values of a power of two (2) raised to a power of the input value x (e.g., $2^x$, $4^x$, ...). At 706, one of the plurality of output mantissas and one of the plurality of output exponents are selected based on the input exponent and the input sign bit. Accordingly, the method 700 generates digital values (e.g., in a floating point format) corresponding to an approximation of $2^x$, $4^x$, etc., which may be used to approximate a Softmax function in a neural network, for example. The circuits for outputting digital values approximating a power of 2 raised to a power of an input value may also be used in other applications.

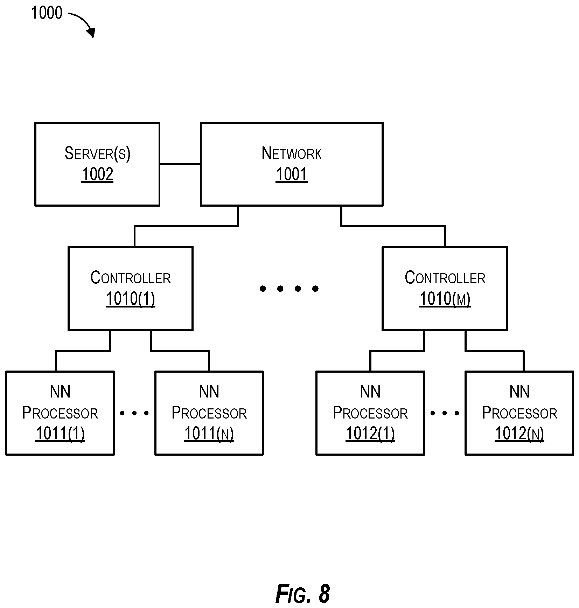

Fig. 8 illustrates a neural network processing system according to some embodiments. In various embodiments, neural networks according to the present disclosure may be implemented and trained in a hardware environment comprising one or more neural network processors. A neural network processor may refer to various graphics processing units (GPU) (e.g., a GPU for processing neural networks produced by Nvidia Corp®), field programmable gate arrays (FPGA) (e.g., FPGAs for processing neural networks produced by Xilinx®), or a variety of application specific integrated circuits (ASICs) or neural network processors comprising hardware architectures optimized for neural network computations, for example. In this example environment, one or more servers 1002, which may comprise architectures illustrated in Fig. 9 above, may be coupled to a plurality of controllers 1010(1)-1010(M) over a communication network 1001 (e.g. switches, routers, etc.). Controllers 1010(1)-1010(M) may also comprise architectures illustrated in Fig. 9 above. Each controller 1010(1)-1010(M) may be coupled to one or more NN processors, such as processors 1011(1)-1011(N) and 1012(1)-1012(N), for example. NN processors 1011(1)-1011(N) and 1012(1)-1012(N) may include a variety of configurations of functional processing blocks and memory optimized for neural network processing, such as training or inference. NN processors in Fig. 8 may include digital circuits described herein for normalizing values (e.g., an approximation of the Softmax function). The NN processors are optimized for neural network computations. Server 1002 may configure controllers 1010 with NN models as well as input data to the models, which may be loaded and executed by NN processors 1011(1)-1011(N) and 1012(1)-1012(N) in parallel, for example. Models may include layers and associated weights as described above, for example. NN processors may load the models and apply the inputs to produce output results. NN processors may also implement training algorithms, for example. Digital circuits described herein may be used in both training and inference, for example.

FURTHER EXAMPLE EMBODIMENTS

In various embodiments, the present disclosure includes systems, methods, and apparatuses for generating approximated values that may be used for normalization. The following examples may be used alone or in various combinations.

In one embodiment, the present disclosure includes a digital circuit comprising: combinational logic receiving first digital bits representing an input mantissa of an input value and second digital bits representing an input exponent of the input value, the combinational logic generating a plurality of output mantissas and plurality of output exponents corresponding to an approximate value of a power of two (2) raised to a power of the input value when the input value is positive and negative and when the input exponent is above and below a first value; and two or more selection circuits configured to receive the plurality of output mantissas and the plurality of output exponents, the selection circuits comprising selection control inputs coupled to the input exponent and an input sign bit of the input value to select one of the plurality of output mantissas and one of the plurality of output exponents.

In another embodiment, the present disclosure includes a method for generating normalized values comprising: receiving, in combinational logic comprising one or more shifter circuits, first digital bits representing an input mantissa of an input value and second digital bits representing an input exponent of the input value; generating, in the combinational logic, a plurality of output mantissas and plurality of output exponents corresponding to an approximate value of a power of two (2) raised to a power of the input value when the input value is positive and negative and when the input exponent is above and below a first value; and selecting, by two or more selection circuits configured to receive the plurality of output mantissas and the plurality of output exponents, one of the plurality of output mantissas and one of the plurality of output exponents based on the input exponent and an input sign bit of the input value.

In another embodiment, the present disclosure includes digital circuit comprising: combinational logic means for receiving first digital bits representing an input mantissa of an input value and second digital bits representing an input exponent of the input value, the combinational logic means generating a plurality of output mantissas and plurality of output exponents corresponding to an approximate value of a power of two (2) raised to a power of the input value when the input value is positive and negative and when the input exponent is above and below a first value; and selection circuit means for receiving the plurality of output mantissas and the plurality of output exponents and selecting one of the plurality of output mantissas and one of the plurality of output exponents based on the input exponent and an input sign bit of the input value.

In one embodiment, the combinational logic generates a plurality of shifted versions of the input mantissa based on the input exponent to produce the plurality of output mantissas and the plurality of output exponents.

In one embodiment, the two or more selection circuits produce: a first output mantissa comprising a sum of a first shifted version of the input mantissa and a first constant and a first output exponent having a zero value when the input sign bit is positive and the input exponent is less than a first value; a second output mantissa comprising a modulus of a second shifted version of the input mantissa and a second output exponent having a digital value of one (1) shifted based on the input exponent added to an integer division of the second shifted version of the input mantissa when the input sign bit is positive and the input exponent is greater than the first value; a third output mantissa comprising the sum of the first shifted version of the input mantissa the first constant, subtracted from a second constant, and a third output exponent having negative one (-1) value when the input sign bit is negative and the input exponent is less than the first value; and a fourth output mantissa comprising a modulus of the second shifted version of the input mantissa, subtracted from the second constant, and a negation of the second output exponent minus one (1) when the input sign bit is negative and the input exponent is greater than the first value.

In one embodiment, the combinational logic comprises one or more shifter circuits having an input coupled to the input mantissa and a shift input coupled to the input exponent, wherein the one or more shifter circuits produce left and right shifted versions of the input mantissa.

In one embodiment, a right shifted version of the input mantissa is used to form a first output mantissa and a second output mantissa, and wherein lower bits of a left shifted version of the input mantissa are used to form a third output mantissa and a fourth output mantissa.

In one embodiment, the right shifted version of the input mantissa is subtracted from a constant to form the second output mantissa.

In one embodiment, the left shifted version of the input mantissa is subtracted from a constant to form the fourth output mantissa.

In one embodiment, upper bits of a left shifted version of the input mantissa is used to form a first output exponent and a second output exponent.

In one embodiment, the upper bits of the left shifted version of the input mantissa is added to a value generated based on the input exponent to form the first output exponent and the second output exponent.

In one embodiment, the value generated based on the input exponent comprises a bit left shifted based on the input exponent.

In one embodiment, said added upper bits of the left shifted version of the input mantissa and the value generated based on the input exponent are negated to produce the second output exponent.

In one embodiment, the one or more shifter circuits comprise barrel shifter circuits.

In one embodiment, the one or more shifter circuits comprise: a right shifter circuit having a first input coupled to the input mantissa through a logic circuit configured to add the input mantissa to a constant and a shift input coupled to the input exponent through a logic circuit configured to negate the input exponent; and a first left shifter circuit having a first input coupled to receive the input mantissa and a shift input coupled to the input exponent.

In one embodiment, the one or more shifter circuits further comprise a second left shifter circuit having a first input coupled to receive a digital value of one (1) and a shift input coupled to the input exponent, wherein an output of the first left shifter circuit and the second left shifter circuit are added together.

In one embodiment, the two or more selection circuits comprise a first multiplexer having a first input coupled to an output of the right shifter circuit and a second input coupled to lower bits of the first left shifter circuit.

In one embodiment, the two or more selection circuits further comprise a second multiplexer having a first input coupled an output of the first multiplexer and a second input coupled to the output of the first multiplexer through a logic circuit configured to subtract a value on an input of the logic circuit from a constant.

In one embodiment, the two or more selection circuits comprise a multiplexer, the multiplexer comprising: a first input coupled to a sum of upper bits of the first left shifter circuit and a value of two (2) raised to a power corresponding to the exponent; a second input coupled to a negative version of the sum; a third input coupled to a zero (0) value; and a fourth input coupled to a negative one (-1) value; and an output producing a final output exponent.

In one embodiment, the digital circuit further comprises control logic configure to receive the input exponent and the input sign bit and generate control signals to at least a mantissa selection circuit and an exponent selection circuit, wherein: an output of the mantissa selection circuit is coupled to an output of the right shifter circuit and an output of the exponent selection circuit is coupled to a zero (0) value when the input sign bit is positive and the input exponent is less than a first value; an output of the mantissa selection circuit is coupled to lower bits of the left shifter circuit and an output of the exponent selection circuit is coupled a sum of upper bits of the first left shifter circuit and a value of two (2) raised to a power corresponding to the input exponent when the input sign bit is positive and the input exponent is greater than the first value; an output of the mantissa selection circuit is coupled to an output of the right shifter circuit through a constant subtraction logic circuit and an output of the exponent selection circuit is coupled to a constant negative one (-1) value when the input sign bit is positive and the input exponent is less than a first value; an output of the mantissa selection circuit is coupled to lower bits of the left shifter circuit through the constant subtraction logic circuit and an output of the exponent selection circuit is coupled a negative of a sum of upper bits of the first left shifter circuit and a value of two (2) raised to a power corresponding to the input exponent when the input sign bit is negative and the input exponent is greater than the first value.

The above description illustrates various embodiments of the present disclosure along with examples of how aspects of the particular embodiments may be implemented. The above examples should not be deemed to be the only embodiments, and are presented to illustrate the flexibility and advantages of the particular embodiments as defined by the following claims. Based on the above disclosure and the following claims, other arrangements, embodiments, implementations, and equivalents may be employed without departing from the scope of the present disclosure as defined by the claims.

## Claims

1. A digital circuit comprising:

   combinational logic (210) receiving first digital bits (201) representing an input mantissa of an input value and second digital bits representing an input exponent of the input value, the combinational logic (201) generating a plurality of output mantissas and plurality of output exponents (250) corresponding to an approximate value of a power of two raised to a power of the input value when the input value is positive and negative and when the input exponent is above and below a first value; and
   two or more selection circuits (220) configured to receive the plurality of output mantissas and the plurality of output exponents (250), the selection circuits (220) comprising selection control inputs coupled to the input exponent and an input sign bit of the input value to select one of the plurality of output mantissas and one of the plurality of output exponents.

2. The digital circuit of claim 1, wherein the combinational logic generates a plurality of shifted versions of the input mantissa based on the input exponent to produce the plurality of output mantissas and the plurality of output exponents, the digital circuit further comprising control logic configured to receive the input exponent and the input sign bit and generate control signals to at least a mantissa selection circuit and an exponent selection circuit.

3. The digital circuit of claim 1, wherein the two or more selection circuits produce:

   a first output mantissa comprising a sum of a first shifted version of the input mantissa and a first constant and a first output exponent having a zero value when the input sign bit is positive and the input exponent is less than a first value;
   a second output mantissa comprising a modulus of a second shifted version of the input mantissa and a second output exponent having a digital value of one shifted based on the input exponent added to an integer division of the second shifted version of the input mantissa when the input sign bit is positive and the input exponent is greater than the first value;
   a third output mantissa comprising the sum of the first shifted version of the input mantissa the first constant, subtracted from a second constant, and a third output exponent having negative one value when the input sign bit is negative and the input exponent is less than the first value; and
   a fourth output mantissa comprising a modulus of the second shifted version of the input mantissa, subtracted from the second constant, and a negation of the second output exponent minus one when the input sign bit is negative and the input exponent is greater than the first value.

4. The digital circuit of claim 1, wherein the combinational logic comprises one or more shifter circuits having an input coupled to the input mantissa and a shift input coupled to the input exponent, wherein the one or more shifter circuits produce left and right shifted versions of the input mantissa.

5. The digital circuit of claim 4, wherein a right shifted version of the input mantissa is used to form a first output mantissa and a second output mantissa, and wherein lower bits of a left shifted version of the input mantissa are used to form a third output mantissa and a fourth output mantissa.

6. The digital circuit of claim 5, wherein the right shifted version of the input mantissa is subtracted from a constant to form the second output mantissa.

7. The digital circuit of claim 5, wherein the left shifted version of the input mantissa is subtracted from a constant to form the fourth output mantissa.

8. The digital circuit of claim 4, wherein upper bits of a left shifted version of the input mantissa is used to form a first output exponent and a second output exponent, wherein the upper bits of the left shifted version of the input mantissa is added to a value generated based on the input exponent to form the first output exponent and the second output exponent.

9. The digital circuit of claim 8, wherein the value generated based on the input exponent comprises a bit left shifted based on the input exponent.

10. The digital circuit of claim 8, wherein said added upper bits of the left shifted version of the input mantissa and the value generated based on the input exponent are negated to produce the second output exponent.

11. The digital circuit of claim 4, wherein the one or more shifter circuits comprise barrel shifter circuits.

12. The digital circuit of claim 4, wherein the one or more shifter circuits comprise:

a right shifter circuit having a first input coupled to the input mantissa through a logic circuit configured to add the input mantissa to a constant and a shift input coupled to the input exponent through a logic circuit configured to negate the input exponent; and
a first left shifter circuit having a first input coupled to receive the input mantissa and a shift input coupled to the input exponent.

13. The digital circuit of claim 12, wherein the one or more shifter circuits further comprise a second left shifter circuit having a first input coupled to receive a digital value of one and a shift input coupled to the input exponent, wherein an output of the first left shifter circuit and the second left shifter circuit are added together.

14. The digital circuit of claim 12, wherein the two or more selection circuits comprise a first multiplexer having a first input coupled to an output of the right shifter circuit and a second input coupled to lower bits of the first left shifter circuit, wherein the two or more selection circuits further comprise a second multiplexer having a first input coupled an output of the first multiplexer and a second input coupled to the output of the first multiplexer through a logic circuit configured to subtract a value on an input of the logic circuit from a constant.

15. The digital circuit of claim 12, wherein the two or more selection circuits comprise a multiplexer, the multiplexer comprising:

a first input coupled to a sum of upper bits of the first left shifter circuit and a value of two raised to a power corresponding to the exponent;
a second input coupled to a negative version of the sum;
a third input coupled to a zero value; and
a fourth input coupled to a negative one value; and
an output producing a final output exponent.


**Patentansprüche**

1. Digitale Schaltlogik, die umfasst:

kombinatorische Logik (210), die erste digitale Bits (201), die eine Eingangsmantisse eines Eingangswerts darstellen, und zweite digitale Bits empfängt, die einen Eingangsexponenten des Eingangswerts darstellen, wobei die kombinatorische Logik (201) eine Vielzahl von Ausgangsmantissen und eine Vielzahl von Ausgangsexponenten (250) generiert, die einem Näherungswert einer Zweierpotenz hoch einer Potenz des Eingangswerts entsprechen, wenn der Eingangswert positiv und negativ ist und wenn der Eingangsexponent über und unter einem ersten Wert liegt; und
zwei oder mehr Auswahlschaltungen (220), die konfiguriert sind, um die Vielzahl von Ausgangsmantissen und die Vielzahl von Ausgangsexponenten (250) zu empfangen, wobei die Auswahlschaltungen (220) Auswahlsteuereingänge umfassen, die mit dem Eingangsexponenten und einem Eingangsvorzeichenbit des Eingangswerts gekoppelt sind, um eine der Vielzahl von Ausgangsmantissen und einen der Vielzahl von Ausgangsexponenten auszuwählen.

2. Digitale Schaltung nach Anspruch 1 1, wobei die kombinatorische Logik eine Vielzahl verschobener Versionen der Eingangsmantisse basierend auf dem Eingangsexponenten generiert, um die Vielzahl von Ausgangsmantissen und die Vielzahl von Ausgangsexponenten zu erzeugen, wobei die digitale Schaltung ferner eine Steuerlogik umfasst, die konfiguriert ist, um den Eingangsexponenten und das Eingangsvorzeichenbit zu empfangen und Steuersignale für mindestens eine Mantissenauswahlschaltung und eine Exponentenauswahlschaltung zu erzeugen.

3. Digitale Schaltung nach Anspruch 1 1, wobei die zwei oder mehr Auswahlschaltungen erzeugen:

   eine erste Ausgangsmantisse, die eine Summe aus einer ersten verschobenen Version der Eingangsmantisse und einer ersten Konstanten und einen ersten Ausgangsexponenten umfasst, der einen Nullwert aufweist, wenn das Eingangsvorzeichenbit positiv ist und der Eingangsexponent kleiner als ein erster Wert ist;
   eine zweite Ausgangsmantisse, die einen Modul einer zweiten verschobenen Version der Eingangsmantisse und einen zweiten Ausgangsexponenten umfasst, der einen digitalen Wert von eins aufweist, der basierend auf dem Eingangsexponenten verschoben ist, der zu einer ganzzahligen Division der zweiten verschobenen Version der Eingangsmantisse addiert wird, wenn das Eingangsvorzeichenbit positiv ist und der Eingangsexponent größer als der erste Wert ist;
   eine dritte Ausgangsmantisse, die die Summe aus der ersten verschobenen Version der Eingangsmantisse, der ersten Konstanten abzüglich einer zweiten Konstanten und einen dritten Ausgangsexponenten umfasst, der einen negativen Wert von eins aufweist, wenn das Eingangsvorzeichenbit negativ ist und der Eingangsexponent kleiner als der erste Wert ist; und
   eine vierte Ausgangsmantisse, die einen Modul der zweiten verschobenen Version der Eingangsmantisse abzüglich der zweiten Konstante, und eine Negation des zweiten Ausgangsexponenten minus eins umfasst, wenn das Eingangsvorzeichenbit negativ ist und der Eingangsexponent größer als der erste Wert ist.

4. Digitale Schaltung nach Anspruch 11, wobei die kombinatorische Logik eine oder mehrere Schieberschaltungen umfasst, die einen mit der Eingangsmantisse gekoppelten Eingang und einen mit dem Eingangsexponenten gekoppelten Schiebeeingang aufweisen, wobei die eine oder die mehreren Schieberschaltungen nach links und rechts verschobene Versionen der Eingangsmantisse erzeugen.

5. Digitale Schaltung nach Anspruch 44, wobei eine nach rechts verschobene Version der Eingangsmantisse verwendet wird, um eine erste Ausgangsmantisse und eine zweite Ausgangsmantisse zu bilden, und wobei untere Bits einer nach links verschobenen Version der Eingangsmantisse verwendet werden, um eine dritte Ausgangsmantisse und eine vierte Ausgangsmantisse zu bilden.

6. Digitale Schaltung nach Anspruch 55, wobei die nach rechts verschobene Version der Eingangsmantisse von einer Konstanten subtrahiert wird, um die zweite Ausgangsmantisse zu bilden.

7. Digitale Schaltung nach Anspruch 55, wobei die nach links verschobene Version der Eingangsmantisse von einer Konstanten subtrahiert wird, um die vierte Ausgangsmantisse zu bilden.

8. Digitale Schaltung nach Anspruch 44, wobei obere Bits einer nach links verschobenen Version der Eingangsmantisse verwendet werden, um einen ersten Ausgangsexponenten und einen zweiten Ausgangsexponenten zu bilden, wobei die oberen Bits der nach links verschobenen Version der Eingangsmantisse zu einem Wert addiert werden, der basierend auf dem Eingangsexponenten generiert wurde, um den ersten Ausgangsexponenten und den zweiten Ausgangsexponenten zu bilden.

9. Digitale Schaltung nach Anspruch 88, wobei der basierend auf dem Eingangsexponenten generierte Wert ein basierend auf dem Eingangsexponenten nach links verschobenes Bit umfasst.

10. Digitale Schaltung nach Anspruch 88, wobei die addierten oberen Bits der nach links verschobenen Version der Eingangsmantisse und der basierend auf dem Eingangsexponenten generierte Wert negiert werden, um den zweiten Ausgangsexponenten zu erzeugen.

11. Digitale Schaltung nach Anspruch 44, wobei die eine oder die mehreren Schieberschaltungen Barrel-Shifter-Schaltungen umfassen.

12. Digitale Schaltung nach Anspruch 44, wobei die eine oder die mehreren Schieberschaltungen umfassen:

   eine Rechtsschieberschaltung, die einen ersten Eingang, der mit der Eingangsmantisse über eine Logikschaltung gekoppelt ist, die konfiguriert ist, um die Eingangsmantisse zu einer Konstanten zu addieren, und einen Schiebeeingang aufweist, der mit dem Eingangsexponenten über eine Logikschaltung gekoppelt ist, die konfiguriert ist, um den Eingangsexponenten zu negieren; und
   eine erste Linksschieberschaltung, die einen ersten Eingang, der zum Empfangen der Eingangsmantisse gekoppelt ist, und einen Schiebeeingang aufweist, der mit dem Eingangsexponenten gekoppelt ist.

**13.** Digitale Schaltung nach Anspruch 1212, wobei die eine oder die mehreren Schieberschaltungen ferner eine zweite Linksschieberschaltung umfassen, die einen ersten Eingang, der zum Empfangen eines digitalen Werts von eins gekoppelt ist, und einen Schiebeeingang aufweist, der mit dem Eingangsexponenten gekoppelt ist, wobei ein Ausgang der ersten Linksschieberschaltung und der zweiten Linksschieberschaltung addiert werden.

**14.** Digitale Schaltung nach Anspruch 1212, wobei die zwei oder mehr Auswahlschaltungen einen ersten Multiplexer umfassen, der einen ersten Eingang, der mit einem Ausgang der Rechtsschieberschaltung gekoppelt ist, und einen zweiten Eingang aufweist, der mit unteren Bits der ersten Linksschieberschaltung gekoppelt ist, wobei die zwei oder mehr Auswahlschaltungen ferner einen zweiten Multiplexer umfassen, der einen ersten Eingang, der mit einem Ausgang des ersten Multiplexers gekoppelt ist, und einen zweiten Eingang aufweisen, der mit dem Ausgang des ersten Multiplexers über eine Logikschaltung gekoppelt ist, die konfiguriert ist, um einen Wert an einem Eingang der Logikschaltung von einer Konstanten zu subtrahieren.

**15.** Digitale Schaltung nach Anspruch 1212, wobei die zwei oder mehr Auswahlschaltungen einen Multiplexer umfassen, wobei der Multiplexer umfasst:

einen ersten Eingang, der mit einer Summe oberer Bits der ersten Linksschieberschaltung und einem Wert von zwei gekoppelt ist, der mit einer dem Exponenten entsprechenden Potenz potenziert wurde;
einen zweiten Eingang, der mit einer negativen Version der Summe gekoppelt ist;
einen dritten Eingang, der mit einem Nullwert gekoppelt ist; und
einen vierten Eingang, der mit einem negativen Wert von eins gekoppelt ist; und
einen Ausgang, der einen endgültigen Ausgangsexponenten erzeugt.

## Revendications

**1.** Circuit numérique comprenant :

une logique (210) combinatoire recevant des premiers bits numériques (201) représentant une mantisse d'entrée d'une valeur d'entrée et des seconds bits numériques représentant un exposant d'entrée de la valeur d'entrée, la logique (201) combinatoire générant une pluralité de mantisses de sortie et une pluralité d'exposants de sortie (250) correspondant à une valeur approximative d'une puissance de deux élevée à une puissance de la valeur d'entrée lorsque la valeur d'entrée est positive et négative et lorsque l'exposant d'entrée est supérieur et inférieur à une première valeur ; et
au moins deux circuits de sélection (220) configurés pour recevoir la pluralité de mantisses de sortie et la pluralité d'exposants de sortie (250), les circuits de sélection (220) comprenant des entrées de commande de sélection couplées à l'exposant d'entrée et un bit de signe d'entrée de la valeur d'entrée pour sélectionner l'une de la pluralité de mantisses de sortie et l'un de la pluralité d'exposants de sortie.

**2.** Circuit numérique selon la revendication 1, dans lequel la logique combinatoire génère une pluralité de versions décalées de la mantisse d'entrée en fonction de l'exposant d'entrée pour produire la pluralité de mantisses de sortie et la pluralité d'exposants de sortie, le circuit numérique comprenant en outre une logique de commande configurée pour recevoir l'exposant d'entrée et le bit de signe d'entrée et pour générer des signaux de commande vers l'au moins un circuit de sélection de mantisse et un circuit de sélection d'exposant.

**3.** Circuit numérique selon la revendication 1, dans lequel les au moins deux circuits de sélection produisent :

une première mantisse de sortie comprenant une somme d'une première version décalée de la mantisse d'entrée et d'une première constante et le premier exposant de sortie ayant une valeur nulle lorsque le bit de signe d'entrée est positif et l'exposant d'entrée est inférieur à une première valeur ;
une deuxième mantisse de sortie comprenant un module d'une seconde version décalée de la mantisse d'entrée et un deuxième exposant de sortie ayant une valeur numérique de un décalée en fonction de l'exposant d'entrée ajouté à une division entière de la seconde version décalée de la mantisse d'entrée lorsque le bit de signe d'entrée est positif et l'exposant d'entrée est supérieur à la première valeur ;
une troisième mantisse de sortie comprenant la somme de la première version décalée de la mantisse d'entrée, la première constante, soustraite d'une seconde constante, et un troisième exposant de sortie ayant une valeur de un négative lorsque le bit de signe d'entrée est négatif et l'exposant d'entrée est inférieur à la première valeur ; et
une quatrième mantisse de sortie comprenant un module de la seconde version décalée de la mantisse d'entrée,

**15**

soustrait de la seconde constante, et une négation du deuxième exposant de sortie moins un lorsque le bit de signe d'entrée est négatif et l'exposant d'entrée est supérieur à la première valeur.

4. Circuit numérique selon la revendication 1, dans lequel la logique combinatoire comprend au moins un circuit décaleur ayant une entrée couplée à la mantisse d'entrée et une entrée de décalage couplée à l'exposant d'entrée, dans lequel l'au moins un circuit décaleur produit des versions décalées à gauche et à droite de la mantisse d'entrée.

5. Circuit numérique selon la revendication 4, dans lequel une version décalée à droite de la mantisse d'entrée est utilisée pour former une première mantisse de sortie et une deuxième mantisse de sortie, et dans lequel des bits inférieurs d'une version décalée à gauche de la mantisse d'entrée sont utilisés pour former une troisième mantisse de sortie et une quatrième mantisse de sortie.

6. Circuit numérique selon la revendication 5, dans lequel la version décalée à droite de la mantisse d'entrée est soustraite d'une constante pour former la deuxième mantisse de sortie.

7. Circuit numérique selon la revendication 5, dans lequel la version décalée à gauche de la mantisse d'entrée est soustraite d'une constante pour former la quatrième mantisse de sortie.

8. Circuit numérique selon la revendication 4, dans lequel des bits supérieurs d'une version décalée à gauche de la mantisse d'entrée sont utilisés pour former un premier exposant de sortie et un deuxième exposant de sortie, dans lequel des bits supérieurs de la version décalée à gauche de la mantisse d'entrée sont ajoutés à une valeur générée en fonction de l'exposant d'entrée pour former le premier exposant de sortie et le deuxième exposant de sortie.

9. Circuit numérique selon la revendication 8, dans lequel la valeur générée en fonction de l'exposant d'entrée comprend un bit décalé à gauche en fonction de l'exposant d'entrée.

10. Circuit numérique selon la revendication 8, dans lequel lesdits bits supérieurs ajoutés de la version décalée à gauche de la mantisse d'entrée et la valeur générée en fonction de l'exposant d'entrée sont inversés pour produire le deuxième exposant de sortie.

11. Circuit numérique selon la revendication 4, dans lequel l'au moins un circuit décaleur comprend des circuits décaleurs à rotation.

12. Circuit numérique selon la revendication 4, dans lequel l'au moins un circuit décaleur comprend :

un circuit décaleur à droite ayant une première entrée couplée à la mantisse d'entrée par l'intermédiaire d'un circuit logique configuré pour ajouter la mantisse d'entrée à une constante et une entrée de décalage couplée à l'exposant d'entrée par l'intermédiaire d'un circuit logique configuré pour inverser l'exposant d'entrée ; et
une premier circuit décaleur à gauche ayant une première entrée couplée pour recevoir la mantisse d'entrée et une entrée de décalage couplée à l'exposant d'entrée.

13. Circuit numérique selon la revendication 12, dans lequel l'au moins un circuit décaleur comprend en outre un second circuit décaleur à gauche ayant une première entrée couplée pour recevoir une valeur numérique de un et une entrée de décalage couplée à l'exposant d'entrée, dans lequel une sortie du premier circuit décaleur à gauche et du second circuit décaleur à gauche sont additionnées.

14. Circuit numérique selon la revendication 12, dans lequel les au moins deux circuits de sélection comprennent un premier multiplexeur ayant une première entrée couplée à une sortie du circuit décaleur à droite et une seconde entrée couplée à des bits inférieurs du premier circuit décaleur à gauche, dans lequel les au moins deux circuits de sélection comprennent en outre un second multiplexeur ayant une première entrée couplée à une sortie du premier multiplexeur et une seconde entrée couplée à la sortie du premier multiplexeur par l'intermédiaire d'un circuit logique configuré pour soustraire une valeur sur une entrée du circuit logique à partir d'une constante.

15. Circuit numérique selon la revendication 12, dans lequel les au moins deux circuits de sélection comprennent un multiplexeur, le multiplexeur comprenant :

une première entrée couplée à une somme de bits supérieurs du premier circuit décaleur à gauche et une valeur de deux élevée à une puissance correspondant à l'exposant ;

une deuxième entrée couplée à une version négative de la somme ;
une troisième entrée couplée à une valeur nulle ; et
une quatrième entrée couplée à une valeur de un négative ; et
une sortie produisant un exposant de sortie final.

*FIG. 1*

*FIG. 2*

*FIG. 3*

*FIG. 4*

Digital Circuit 500A

Mantissa ($m_x$) → Shifter (Right) 410, OR N 502

Mux 416 — Select 0

M - x 418

Mux 420 — Select 1 → Mantissa ($m_y$)

-x 408

Shifter (Left) 412

Shifter (Left) 414

1 406

+1 504

+ 422

-1-x 424

1 426, 0 428, -1 430

Mux 432 — Select 0, Select 1 → Exponent ($e_y$)

Exponent ($e_x$)

Control Logic 470 — Select 0, Select 1

Sign ($s_x$) → Sign ($s_y$)

FIG. 5A

*FIG. 5B*

EP 4 285 215 B1

600

Input Vector ($X_i$)

Input Matrix

| Approximation Circuit <u>602</u> | Buffer <u>604</u> | Summation Circuit <u>606</u> | Divider Circuit <u>608</u> | Matrix Multiplication Circuit <u>610</u> |
|---|---|---|---|---|
| $A^x_i$ | $A^y_i$ | $\sum Ay_i$ | $\dfrac{Ay_i}{\sum Ay_i}$ | |

Result

*FIG. 6*

700

| 702 | Receive first digital bits representing input mantissa of input value, second digital bits representing input exponent of input value, and input sign bit of input value |

↓

| 704 | Generate plurality of output mantissas and plurality of output exponents corresponding to approximate values of a power of two (2) raised to a power of the input value |

↓

| 706 | Select one of the plurality of output mantissas and one of the plurality of output exponents based on the input exponent and the input sign bit |

*FIG. 7*

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6178435 B1

### Non-patent literature cited in the description

- Hardware-Aware Softmax Approximation for Deep Neural Networks. **GENG XUE et al.** COMPUTER VISION - ECCV 2020: 16TH EUROPEAN CONFERENCE, GLASGOW, UK, AUGUST 23-28, 2020: PROCEEDINGS; [LECTURE NOTES IN COMPUTER SCIENCE. SPRINGER INTERNATIONAL PUBLISHING, 25 May 2019, 107-122

- Simplified Hardware Implementation of the Softmax Activation Function. **KOURETAS I et al.** 2019 STH INTERNATIONAL CONFERENCE ON MODERN CIRCUITS AND SYSTEMS TECHNOLOGIES (MOCAST). IEEE, 13 May 2019, 1-4